# EUROPÄISCHE PATENTSCHRIFT

(11) **EP 1 364 840 B1**
(45) Veröffentlichungstag und Bekanntmachung des Hinweises auf die Patenterteilung: **05.11.2008**
(21) Anmeldenummer: 03090146.6
(22) Anmeldetag: 16.05.2003
(51) Int. Cl.: B60R 21/16, B60R 21/08

(54) **Fahrer-oder Beifahrerairbag**
Driver or passenger air bag
Coussin gonflable pour conducteur ou passager

(30) Priorität: 24.05.2002 DE 10224138
(43) Veröffentlichungstag der Anmeldung: 26.11.2003
(73) Patentinhaber: Takata-Petri AG, 63743 Aschaffenburg (DE)
(72) Erfinder: Heym, Axel, 13156 Berlin (DE)
(74) Vertreter: Baumgärtel, Gunnar

(56) Entgegenhaltungen:
- EP-A- 1 262 377
- WO-A-97/06987
- DE-A- 3 833 889
- DE-A- 10 033 937
- DE-U- 20 102 115
- GB-A- 2 309 202
- US-A- 4 076 277
- US-A- 5 599 041
- US-A- 6 042 147
- PATENT ABSTRACTS OF JAPAN vol. 016, no. 538 (M-1335), 9. November 1992 (1992-11-09) -& JP 04 201644 A (ASAHI CHEM IND CO LTD), 22. Juli 1992 (1992-07-22)
- PATENT ABSTRACTS OF JAPAN vol. 017, no. 099 (M-1373), 26. Februar 1993 (1993-02-26) -& JP 04 292239 A (ASAHI CHEM IND CO LTD), 16. Oktober 1992 (1992-10-16)

## Beschreibung

Die Erfindung betrifft einen Fahrer- oder Beifahrerairbag für Kraftfahrzeuge nach dem Oberbegriff des Patentanspruchs 1.

Ein derartiger Airbag dient zum Schutz eines Kraftfahrzeuginsassen bei einem sogenannten Front-Crash, bei dem ein Fahrzeug frontal mit einem Hindernis zusammenprallt, insbesondere zur Vermeidung einer Kollision eines der vorderen Fahrzeuginsassen mit der Windschutzscheibe, dem Lenkrad oder der Armaturentafel. Der Gassack eines gattungsgemäßen Fahrer- oder Beifahrerairbags weist mindestens zwei derart voneinander getrennte Gassackabschnitte auf, dass der mittels eines Gasgenerators aufgeblasene Gassack auf seiner dem zu schützenden Insassen zugewandten Vorderseite mit einem zwischen den Gassackabschnitten verlaufenden Spalt versehen ist und die Gassackabschnitte ausschließlich auf der dem zu schützenden Insassen abgewandten Rückseite miteinander verbunden sind.

Aus der DE 100 33 937 A1 ist ein Gassack für eine Insassen-Schutzeinrichtung in Kraftfahrzeugen bekannt, der mittels eines Gasgenerators aufblasbar ist und dessen äußeren Hülle im aufgeblasenen Zustand auf ihrer dem zu schützenden Insassen zugeordneten Hüllfläche einen Spalt ausbildet, in den der zu schützende Insasse in einem oop-Fall beim Aufblasen des Gassackes mit einem dem Gassack zugewandten Körperteil eindringen kann, wobei der Spalt aufgespreizt wird, um die Kollision des Insassen mit der zugeordneten Hüllfläche des Gassackes in einem oop-Fall zu mildern. Zusätzlich können Mittel, z.B. in Form eines flächigen Elementes, vorgesehen sein, um die durch den Spalt voneinander getrennten Gassackabschnitte gegeneinander zu verspannen, so dass der Gassack nach dem Aufblasen für einen in Normalposition befindlichen Insassen denselben Schutz bildet wie ein Gassack ohne Spalt. Dabei ist jedoch durch Anordnung und Ausbildung des flächigen Elementes sichergestellt, dass ein außerhalb seiner normalen Sitzposition befindlicher, in Richtung auf das Airbagmodul vorgebeugter Insasse (entsprechend dem sogenannten oop-Fall) beim Aufblasen des Gassackes in den Gassackspalt eindringen kann.

Aus der DE 201 02 115 U1 ist ein sogenannter Ringluftsack für ein Fahrer- oder Beifahrerairbagmodul bekannt, der eine ringförmig aufzublasende Kammer aufweist, die eine innere, dem zu schützenden Insassen zugewandte Einbuchtung umschließt. Mit derartigen Gassäcken sollen in einem oop-Fall bessere Rückhaltewerte dadurch erzielt werden, dass die dem Insassen zugewandte Vorderseite des Gassackes weniger stark beschleunigt wird als bei Gassäcken ohne ringförmige Kammer und hierdurch die Gefahr einer Verletzung des Insassen als Folge einer Kollision mit dem sich entfaltenden Gassack vermindert wird. Dabei ist an der Gassackwand ein Verschlussteil derart befestigt, dass es sich im aufgeblasenen Zustand des Gassackes vor die Mündung der Einbuchtung schiebt und die Einbuchtung hierdurch verschließt. Hierdurch kann der zu schützende Fahrzeuginsasse nicht in die Einbuchtung eindringen.

Nachteilig bei den bekannten Gassäcken für ein Airbagmodul ist, dass sie trotz verminderter mechanischer Belastung des zu schützenden Insassen in einem oop-Fall zu einer thermischen Belastung des zu schützenden Insassen führen können, wenn dieser mit heißen Gewebeteilen des Gassackes in Kontakt gerät, d.h. mit Gewebeteilen der Gassackhülle, die durch die zum Aufblasen des Gassackes verwendeten heißen Gase erwärmt wurden.

Aus der JP-A 4-292239 und der JP-A 4-201644 ist es jeweils bekannt, einen in einer gattungsgemäßen Airbaganordnung zwischen zwei Gassackbereichen gebildeten Spalt an der einem zu schützenden Fahrzeuginsassen zugewandten Vorderseite eines Gassackes mit einem flächigen Gewebe zu überbrücken, so dass der Fahrzeuginsasse in einem Crash-Fall von jenem flächigen Gewebe aufgefangen wird, bevor er in den dahinter liegenden Spalt eindringen kann.

Eine vergleichbare Anordnung ist in der WO 97/06987 A1 für einen Seitenairbag und in der älteren, nachveröffentlichten EP 1 262 377 A2 für einen Knieschutzairbag dargestellt.

In der US-A 4,076,277 ist ein Frontairbag für ein Kraftfahrzeug beschrieben, der mehrere von einer zusätzlichen Hülle umgebene Gassackbereiche umfasst.

Der Erfindung liegt das Problem zugrunde, einen Fahrer- bzw. Beifahrerairbag der eingangs genannten Art weiter zu verbessern.

Dieses Problem wird erfindungsgemäß durch die Schaffung eines Fahrer- bzw. Beifahrerairbags mit den Merkmalen des Patentanspruchs 1 gelöst.

Danach ist der Spalt im Bereich der Vorderseite des Gassackes derart von einem flächigen Element überbrückt, dass der zu schützende Insasse bei einem Aufprall in Richtung auf die Vorderseite des Gassackes möglichst nicht durch die beiden Gassackabschnitte, sondern durch das flächige Element aufgefangen wird. Dabei ist das flächige Element gegenüber dem dem Kopf und Oberkörper des zu schützenden Fahrzeuginsassen zugewandten vorderen Ende (der Vorderseite) des Gassackes etwas nach hinten, in Richtung auf die dem Kopf und Oberkörper des Fahrzeuginsassen abgewandte Rückseite des Gassackes versetzt, so dass ein Teil des zwischen den Gassackabschnitten gebildeten Spaltes - vom Kopf und Oberkörper des Fahrzeuginsassen her gesehen - vor dem flächigen Element verläuft. Dadurch dringt der Fahrzeuginsasse vor dem Aufprall auf das flächige Element zunächst ein Stückweit in den vom flächigen Element nicht überdeckten Bereich des Spaltes zwischen den beiden Gassackabschnitten ein, bevor er durch das flächige Element aufgefangen wird. Somit kann durchaus ein Körperteil des Insassen (zusammen mit dem flächigen Element) ein Stück weit in den Spalt hineingeraten; der Insasse soll jedoch nicht an dem flächigen Element vorbei, d.h. ohne von diesem aufgefangen zu werden, in den Spalt insgesamt eindringen.

Dadurch, dass der erfindungsgemäß ausgebildete Gassack einerseits zwei Gassackabschnitte aufweist, die an der Vorderseite des Gassackes durch einen Spalt vollständig voneinander getrennt sind (wie aus der DE 100 33 937 A1 bekannt) und andererseits ein flächiges Element aufweist, das den Spalt derart überbrückt, dass der zu schützende Insasse nicht in diesen eindringen kann, lässt sich erreichen, dass die Rückhaltewirkung zum Schutz eines Fahrzeuginsassen im Wesentlichen durch das flächige Element übernommen wird und die beiden aufblasbaren Gassackabschnitte im wesentlichen nur dazu dienen, das flächige Element zu straffen. Hierdurch kann die zum Schutz des Fahrzeuginsassen erforderliche Rückhaltewirkung erreicht werden, ohne dass der Insasse in Kontakt mit der Hülle des Gassackes und somit mit möglicherweise heißen Gewebeteilen gerät.

Zwar ist aus der WO 97/06987 ein Seitenairbag bekannt, der eine erste, zum Schutz des Kopfes eines Fahrzeuginsassen vorgesehene und eine zweite zum Schutz des Thoraxbereiches des Fahrzeuginsassen vorgesehene Kammer aufweist, wobei diese beiden Kammern auf der den zu schützenden Fahrzeuginsassen zugewandten Vorderseite durch einen Spalt voneinander getrennt sind und dieser Spalt mittels eines flächigen Elementes überbrückt ist; jedoch ist die dort beschriebene Anordnung speziell für ein Kopf-Thorax-Airbag als Seitenairbag ausgebildet.

Der erfindungsgemäß ausgestaltete Gassack für einen Fahrer bzw. Beifahrerairbag ist an jedem der durch den Spalt voneinander getrennten Gassackabschnitte an mindestens einer Stelle befestigt und weist hierbei vorzugsweise insgesamt mindestens drei Befestigungsstellen auf. Hierdurch wird erreicht, dass das flächige Element unverschiebbar (bezüglich des Gassackes) an dem Gassack festgelegt ist.

Beim Aufblasen des Gassackes wird das flächige Element gestrafft, so dass es die erforderliche Rückhaltewirkung entfalten kann, und gleichzeitig werden die durch den Spalt voneinander getrennten Gassackabschnitte gegeneinander verspannt.

Hierbei ist zu beachten, dass durch das Verspannen der Gassackabschnitte an den Stellen, an denen sich die beiden Gassackabschnitte berühren, Kontaktkräfte wirken, die die Tendenz haben, die Gassackabschnitte wiederum auseinander zu drücken. Dem wirkt jedoch das flächige Element entgegen, wobei die Kontaktkräfte zusätzlich zur Straffung des flächigen Elementes beitragen.

Das flächige Element überbrückt den Spalt derart, dass der Insasse bei einem Aufprall in Richtung auf die Vorderseite des Gassackes (und zwar auch in einem sogenannten oop-Fall) durch das flächige Element aufgefangen wird, also dieses als eigentliches Rückhalteelement dient.

Der Insasse wird demnach vorzugsweise durch einen Bereich des flächigen Elementes aufgefangen und zurückgehalten, hinter dem zumindest ein Teil des Spaltes verläuft, so dass ein unmittelbarer Kontakt des Insassen mit der Gassackhülle möglichst vermieden wird.

Die Gassackabschnitte sind vorzugsweise derart ausgebildet und angeordnet, dass sie sich beim Aufblasen des Gassackes - von dem zu schützenden Insassen her gesehen - jeweils in eine neben den Oberkörper des zu schützenden Insassen weisende Richtung entfalten, so dass sich der Spalt in dem aufgeblasenen Gassack im Wesentlichen in Längsrichtung des Oberkörpers des zu schützenden Insassen, d.h. parallel zur Wirbelsäule des entsprechenden Insassen, erstreckt.

Das flächige Element selbst kann einerseits membranartig, z.B. als Gewebeteil, oder andererseits als ein Netz ausgebildet sein.

Zur Befestigung des flächigen Elementes an dem Gassack eignen sich diejenigen Nähte, die zugleich zur Verbindung verschiedener Teile der Gassackhülle, z.B. einer Unter- und einer Oberplatte der Gassackhülle dienen.

Gemäß einer Ausführungsform der Erfindung weist der Gassack genau zwei durch den Spalt voneinander getrennte Gassackabschnitte auf, die im aufgeblasenen Zustand im Querschnitt im Wesentlichen V-förmig angeordnet sind.

Nach einer anderen Ausführungsform der Erfindung sind mehr als zwei Gassackabschnitte vorgesehen, die im aufgeblasenen Zustand im Wesentlichen sternförmig angeordnet sind.

Weitere Merkmale und Vorteile der Erfindung werden bei der nachfolgenden Beschreibung von Ausführungsbeispielen anhand der Figuren deutlich werden.

Es zeigen:
- Figur 1a: eine perspektivische Darstellung eines aus zwei Gassackabschnitten bestehenden Gassackes für ein Seitenairbagmodul, der an seiner Vorderseite einen durch ein flächiges Element überbrückten Spalt aufweist;
- Figur 1b: den Gassack aus Figur 1a, eingebaut in ein Kraftfahrzeug;
- Figur 1c: die Anordnung aus Figur 1b während des Eintauchens eines zu schützenden Fahrzeuginsassen;
- Fig. 1d-1g: unterschiedliche Ansichten des Gassackes aus Figur 1a;
- Figur 2a: eine schematische Darstellung der Unterplatte eines aus zwei Gassackabschnitten bestehenden Gassackes, der in seiner Vorderseite einen Spalt bildet;
- Figur 2b: einen Gassack entsprechend Figur 2a im aufgeblasenen Zustand innerhalb eines Kraftfahrzeugs;
- Figur 2c: eine Vorderansicht eines Gassackes gemäß Figur 2a mit einem den Spalt überbrückenden flächigen Element;
- Figur 2d: einen Gassack entsprechend Figur 2a beim Entfalten aus einem Modulgehäuse heraus;
- Figur 2e: den Gassack aus Figur 2d nach dem vollständigen Entfalten;
- Figur 3a: eine schematische Darstellung eines innerhalb eines Modulgehäuses angeordneten, gefalteten Gassackes mit zwei durch einen Spalt voneinander getrennten Gassackabschnitten und einem flächigen Element zur Überbrückung des Spaltes;
- Figur 3b: den Gassack aus Figur 3a beim Entfalten;
- Figur 3c: den Gassack aus den Figuren 3a und 3b im entfalteten Zustand;
- Figur 4a: eine Darstellung gemäß Figur 3a, wobei zusätzlich der zu schützende Fahrzeuginsasse in einer oop-Position gezeigt ist;
- Figur 4b: eine Darstellung gemäß Figur 3b, wobei die Entfaltung des Gassackes durch einen sich in oop-Position befindlichen Fahrzeuginsassen beeinflusst wird;
- Figur 4c: eine Darstellung gemäß Figur 3c mit einem sich in oop-Position befindlichen Fahrzeuginsassen;
- Figur 5a: eine erste Abwandlung der Gassackanordnung aus Figur 1b;
- Figur 5b: eine Draufsicht auf den Gassack gemäß der Gassackanordnung aus Figur 5a;
- Figur 6a: eine zweite Abwandlung der Gassackanordnung aus Figur 1b;
- Figur 6b: eine Vorderansicht des Gassackes der Gassackanordnung aus Figur 6a;
- Figur 7a: eine dritte Abwandlung der Gassackanordnung aus Figur 1 b;
- Figur 7b: eine Vorderansicht des Gassackes der Gassackanordnung aus Figur 7a;
- Figur 8: eine vierte Abwandlung der Gassackanordnung aus Figur 1b;
- Figur 9: eine fünfte Abwandlung der Gassackanordnung aus Figur 1 b.

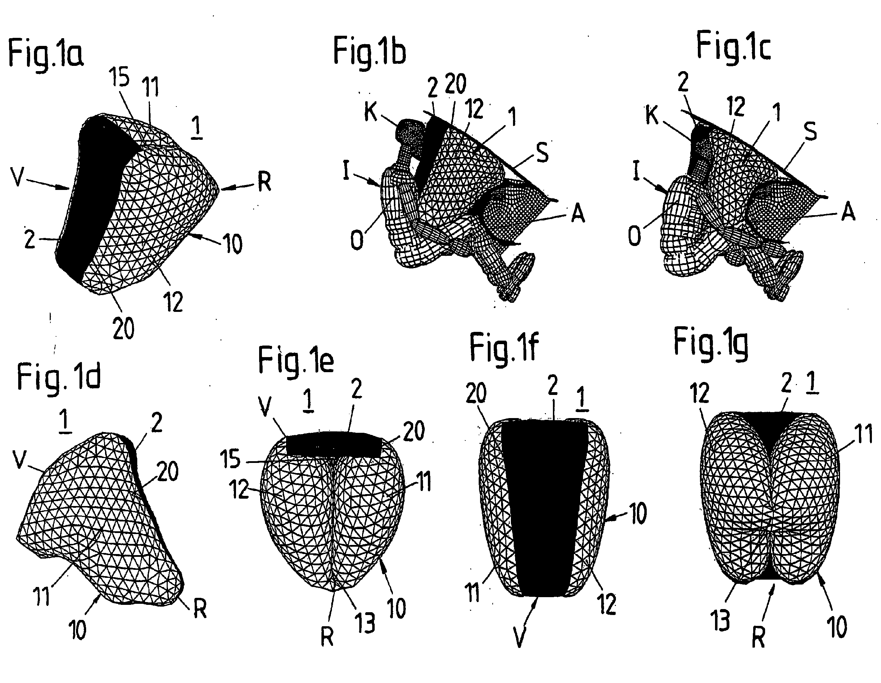

Die Figuren 1a bis 7b und 9 zeigen dabei keine Gassackanordnung, bei der ein zwischen zwei Gassackbereichen gebildeter Spalt durch ein flächiges Element überbrückt wird, welches sich in einem Übergangsbereich zwischen der dem zu schützenden Fahrzeuginsassen zugewandten Vorderseite und der dem zu schützenden Fahrzeuginsassen abgewandten Rückseite eines Gassackes befindet. Vielmehr ist hier das flächige Element jeweils an der Vorderseite des entsprechenden Gassackes dargestellt; die besagten Figuren zeigen daher keine Ausführungsbeispiele mit allen Merkmalen der beanspruchten Erfindung.

In den Figuren 1 a und 1d bis 1g ist ein Gassack 1 dargestellt, dessen Gassackhülle 10 zwei auf der Rückseite R des Gassackes 1 durch einen Kanal 13 einstückig miteinander verbundene Gassackabschnitte 11, 12 aufweist, die auf der Vorderseite V des Gassackes 1 einen Spalt ausbilden, der durch ein flächiges Element 2 in Form einer Membran bzw. eines Gewebeteiles überbrückt ist. Die beiden Gassackabschnitte 11, 12 sind dabei auf der Vorderseite V des Gassackes 1 vollständig voneinander getrennt, d.h., der Spalt 15 erstreckt sich durch den gesamten Gassack, so dass die beiden Gassackabschnitte 11, 12 um den Verbindungskanal 13 zueinander verschwenkt werden könnten, wenn sie nicht durch das flächige Element 2 zusammengehalten würden. Das flächige Element 2 ist entlang seines äußeren Randes 20 mit jedem der beiden Gassackabschnitte 11, 12 vernäht, und zwar derart, dass im aufgeblasenen Zustand des Gassackes 1 das flächige Element 2 gestrafft ist und gleichzeitig die beiden, im Querschnitt ein V bildenden Gassackabschnitte 11, 12 gegeneinander verspannt.

Figur 1b zeigt den Gassack aus Figur 1a im aufgeblasenen Zustand in einem Kraftfahrzeug. Der Gassack ist hierbei Bestandteil eines innerhalb der Armaturentafel A des Kraftfahrzeugs angeordneten Beifahrerairbagmoduls und erstreckt sich im aufgeblasenen Zustand zwischen der Armaturentafel A, der Frontscheibe S und dem zu schützenden Insassen I. Die Rückseite R des Gassackes ist dabei zusammen mit den übrigen Bestandteilen des Airbagmoduls, nämlich einem Gasgenerator zum Aufblasen des Gassackes und einem Modulgehäuse zur Aufnahme von Gassack und Gasgenerator, an der Armaturentafel A festgelegt. Die Vorderseite V des Gassackes ist dem Oberkörper O und dem Kopf K des zu schützenden Insassen I zugewandt, und zwar derart, dass der zu schützende Insasse I zur Erzielung der gewünschten Rückhaltewirkung mit seinem Kopf K und seinem Oberkörper O auf das flächige Element 2 auftrifft, wie anhand Figur 1c dargestellt, die den Aufprall des Fahrzeuginsassen l mit seinem Kopf K und seinem Oberkörper O auf den aus dem Gassack 1 und dem flächigen Element 2 bestehenden Airbag zeigt. Hinter dem Bereich des flächigen Elementes 2, auf den der Fahrzeuginsasse l mit seinem Kopf K und seinem Oberkörper O auftrifft, erstreckt sich der Spalt 15 zwischen den beiden Gassackabschnitten 11, 12, so dass eine unmittelbare Kollision des Kopfes K und des Oberkörpers O des Fahrzeuginsassen l mit der Hülle 10 des Gassackes 1 möglichst vermieden wird. Außerdem ermöglicht diese Konfiguration eine Selbstzentrierung des Kopfes K und Oberkörpers O des Insassen l bei einem außermittigen Aufprall auf das flächige Element 2.

Eine wesentliche Funktion des Gassackes 1 liegt hierbei darin, das flächige Element 2 zu straffen, so dass es die gewünschte Rückhaltewirkung entfalten kann. Gleichzeitig sind die Gassackabschnitte 11, 12 hinreichend nachgiebig, weil das zum Aufblasen des Gassackes 1 verwendete Gas spätestens nach Entfalten des Gassackes 1 unmittelbar wieder abgelassen wird, so dass das flächige Element 2 auch im gestrafften Zustand beim Aufprall des Fahrzeuginsassen l noch hinreichend verformbar ist, um Verletzungen des Fahrzeuginsassen I zu vermeiden, die bei einer zu starren Einspannung des flächigen Elementes 2 auftreten könnten.

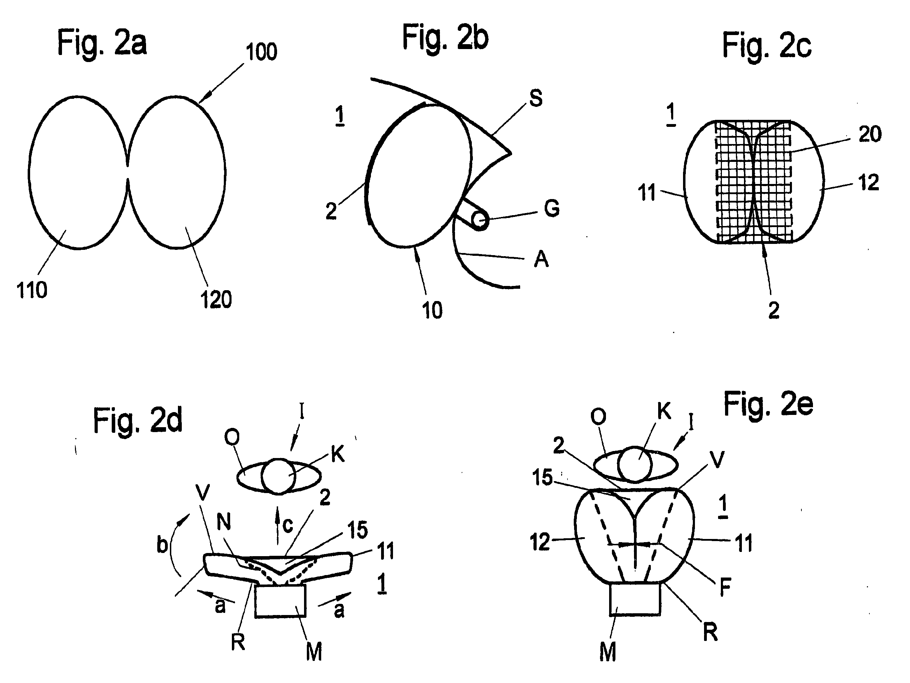

Figur 2a zeigt ein die Ober- bzw. Unterplatte eines Gassackes 1 der in den Figuren 1a bis 1g dargestellten Art bildendes Gewebeteil 100. Die Hülle des Gassackes 1 besteht aus zwei identischen, entlang einer Naht miteinander verbundenen Gewebeteilen 100 gemäß Figur 2a. Jedes der beiden, die Ober- bzw. Unterplatte bildenden Gewebeteile 100 weist jeweils zwei einstückig miteinander verbundene ellipsenförmige Abschnitte 110, 120 auf, so dass sich aus den Gewebeteilen ein Gassack 1 mit zwei Gassackabschnitten 11, 12 entsprechend den Figuren 1a bis 1g bilden lässt.

Figur 2b zeigt in einer schematischen Seitenansicht einen aus zwei Gewebeteilen 100 gemäß Figur 2a bestehenden Gassack 1 im aufgeblasenen Zustand in einem Kraftfahrzeug, wobei der Gassack 1 Bestandteil eines in der Armaturentafel des Kraftfahrzeugs angeordneten Beifahrerairbagmoduls ist und durch einen in der Armaturentafel angeordneten Gasgenerator G aufblasbar ist. Im aufgeblasenen Zustand erstreckt sich der Gassack 1 von dem zu schützenden Fahrzeuginsassen (Beifahrer) her gesehen vor der Armaturentafel A und unterhalb der Frontscheibe S.

Figur 2c zeigt eine Vorderansicht eines aufgeblasenen, aus den beiden Gewebeteilen 100 gemäß Figur 2a bestehenden Gassackes, wobei die beiden Gassackabschnitte 11, 12 auf der dem zu schützenden Insassen zugewandten Vorderseite des Gassackes durch einen Spalt voneinander getrennt sind, der durch ein flächiges Element 2 vollständig überdeckt wird, und wobei das flächige Element 2 entlang seines Randes 20 mit jedem der Gassackabschnitte 11, 12 vernäht ist.

Figur 2d zeigt den Gassack 1 während er sich durch Aufblasen aus dem Modulgehäuse M eines Beifahrerairbagmoduls heraus entfaltet. Es ist erkennbar, dass die beiden Gassackabschnitte 11, 12 zu Beginn der Entfaltung zunächst in einer Richtung a nach außen und neben den Oberkörper O des zu schützenden Insassen l bewegen, bevor beim weiteren Aufblasen eine Bewegung in einer Richtung b hin zu dem Oberkörper O und dem Kopf K des zu schützenden Insassen erfolgt. Die beiden auf der Vorderseite V des Gassackes 1 durch einen Spalt 15 voneinander getrennten Gassackabschnitte 11, 12 verbleiben dabei, wie anhand der Seitenansicht des vollständig aufgeblasenen Gassackes in Figur 2e deutlich wird, im Wesentlichen am seitlichen Randbereich des Oberkörpers O des zu schützenden Fahrzeuginsassen l. Dem zentralen Bereich des Oberkörpers O (zentraler Brust- und Bauchbereich sowie Kopf K) ist das flächige Element 2 zugeordnet, das sich beim Aufblasen in einer Richtung c frontal auf den zu schützenden Insassen hinzu bewegt und das durch die beiden Gassackabschnitte 11, 12 gestrafft wird.

In Figur 2e sind ferner die Kontaktkräfte F angedeutet, die auftreten, wenn sich beim Entfalten des Gassackes die beiden Gassackabschnitte 11, 12 im Bereich des Spaltes 15 berühren. Die Kräfte F haben den Effekt, die Gassackabschnitte 11, 12 auseinander zu drücken, und führen zu einer Straffung des flächigen Elementes 2. Die in dem flächigen Element 2 auftretende Spannung wird durch die Abmessung des den Spalt 15 überbrückenden Bereiches des flächigen Elementes 2 beeinflusst. Je kürzer die Distanz zwischen den Befestigungsstellen 20 des flächigen Elementes 2 beidseits des Spaltes 15 ist, desto größer ist die im flächigen Element auftretende Spannung. Dies ist bedingt durch die mit kürzerer Distanz zunehmenden Kontaktkräfte zwischen den Gassackabschnitten 11, 12 an ihren Kontaktflächen. Bei einer größeren Abmessung des den Spalt 15 überbrückenden Bereiches des flächigen Elementes 2 (entsprechend einer größeren Distanz zwischen den Befestigungsstellen des flächigen Elementes 2 beidseits des Spaltes 15 und somit einer größeren Breite des Spaltes 15) tritt nicht nur eine geringere Spannung auf, sondern die Gassackabschnitte 11, 12 entfalten sich stärker seitlich nach außen. Die Abmessung des flächigen Elementes 2 steuert somit auch die Anordnung der Gassackabschnitte 11, 12 des vollständig aufgeblasenen Gassackes.

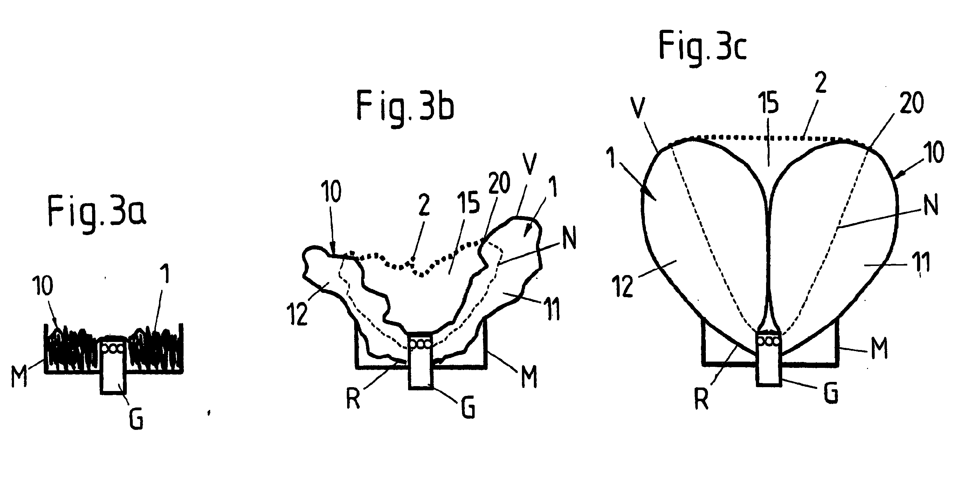

Figur 3a zeigt in größerem Detail den innerhalb eines Modulgehäuses M eines Beifahrerairbagmoduls angeordneten Gassack 1 aus den Figuren 1a bis 2e, wobei der in Falten gelegte Gassack 1 einen Gasgenerator G umgibt.

Figur 3b zeigt in größerem Detail den Beginn des Entfaltungsvorganges des Gassackes 1 aus dem Modulgehäuse M heraus beim Aufblasen mittels eines Gasgenerators G, entsprechend der schematischen Darstellung aus Figur 2d. Zur Erläuterung wird auf die Ausführungen zu Figur 2d verwiesen. Es ist auch erkennbar, dass zur Befestigung des flächigen Elementes 2 an den Gassackabschnitten 11, 12 die Naht N verwendet wird, die zur Verbindung der beiden Gewebeteile (vgl. Figur 2a) dient, aus denen die Hülle des Gassackes 1 besteht.

Figur 3c zeigt in größerem Detail eine Darstellung des mittels des Gasgenerators G vollständig aufgeblasenen und vollständig aus dem Modulgehäuse M heraus entfalteten Gassackes, entsprechend der schematischen Darstellung in Figur 2e, auf deren Erläuterung für weitere Einzelheiten verwiesen wird.

Anhand der Figuren 3b und 3c ist insbesondere erkennbar, dass während des gesamten Entfaltungsvorganges des Gassackes 1 der auf der Vorderseite V des Gassackes 1 zwischen den beiden Gassackabschnitten 11, 12 ausgebildete Spalt 15 stets durch das flächige Element 2 verdeckt ist.

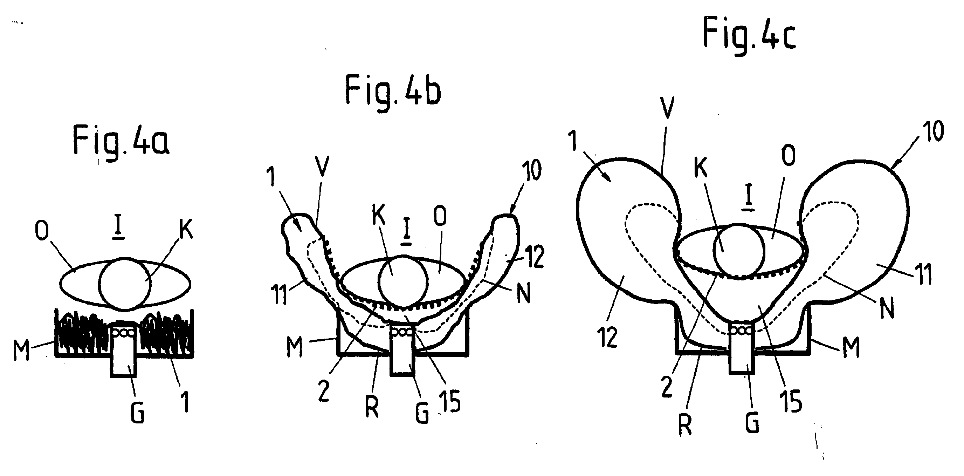

Figur 4a zeigt eine Darstellung des in einem Modulgehäuse M gefalteten Gassackes 1 entsprechend Figur 3a, wobei sich jedoch ein Fahrzeuginsasse l mit seinem Oberkörper O und seinem Kopf K sehr dicht vor dem Modulgehäuse M befindet. Dies entspricht einem sogenannten oop-Fall, in dem der Fahrzeuginsasse aus seiner normalen Sitzposition heraus in Richtung auf das Airbagmodul vorgebeugt ist.

Die Figuren 4b und 4c zeigen den Gassack 1 am Beginn des Entfaltungsvorganges sowie im vollständig aufgeblasenen Zustand, entsprechend der Darstellung in den Figuren 3b und 3c, wobei jedoch der in Richtung auf das Airbagmodul vorgebeugte Fahrzeuginsasse l den Entfaltungsvorgang des Gassackes 1 beeinflusst. Anhand der Figuren 4b und 4c wird deutlich, dass sich die beiden Gassackabschnitte 11, 12 durch das frühzeitige Eintauchen des Insassen l in den Bereich zwischen den beiden Gassackabschnitten 11, 12 im Wesentlichen seitlich neben dem Oberkörper O und dem Kopf K des zu schützenden Fahrzeuginsassen l entfalten, so dass ein unmittelbares Anschießen des Fahrzeuginsassen I in dem oop-Fall verhindert wird.

Wie in dem Fall, in dem sich der zu schützende Fahrzeuginsasse l in einer normalen Sitzposition befindet, wird auch hier die Rückhaltefunktion hinsichtlich des Fahrzeuginsassen l von dem flächigen Element 2 übernommen, das an seinem Rand 20 an den beiden Gassackabschnitten 11, 12 befestigt ist und den Spalt 15 zwischen den beiden Gassackabschnitten 11, 12 überdeckt. Durch das in dem oop-Fall auftretende frühzeitige Eindringen des zu schützenden Fahrzeuginsassen l in den Bereich zwischen den beiden Gassackabschnitten 11, 12 ist das flächige Element 2, verglichen mit dem Auslösen des Airbags bei einem in Normalposition befindlichen Insassen, ein Stück weit in Richtung auf die Rückseite R des Gassackes 1 verschoben, so dass der Insasse l mit seinem Oberkörper O ein Stück weit in den Spalt 15 eindringen kann. Ein vollständiges Eindringen des Insassen l mit seinem Oberkörper O in den Spalt 15 wird jedoch durch das flächige Element 2 verhindert.

Entscheidend für die Rückhaltefunktion des Gassackes 1 in einem oop-Fall ist, dass ein unmittelbares, frontales Anschießen des Insassen l mit den Gassackabschnitten 11, 12 vermieden wird und dass der Insasse l von dem sich nur vergleichsweise langsam auf den Insassen l hin bewegenden flächigen Element 2 aufgefangen wird, so dass die Gefahr einer Verletzung des Insassen l erheblich reduziert ist.

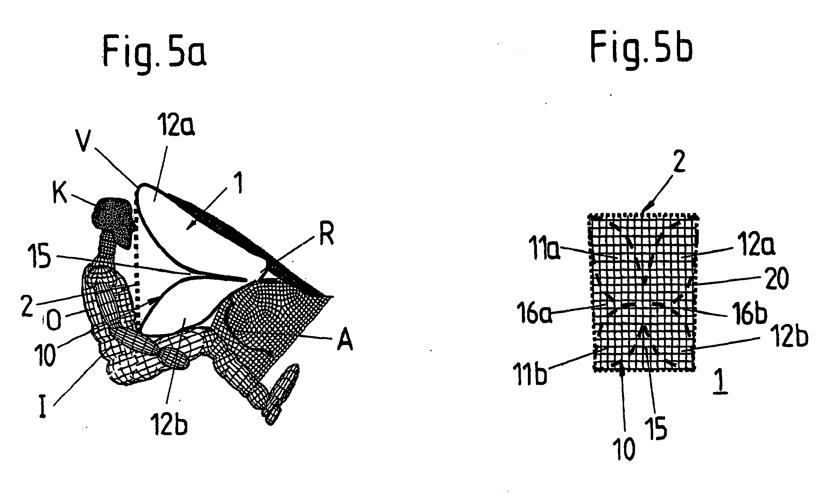

In den Figuren 5a und 5b ist eine Abwandlung des in den vorhergehenden Figuren gezeigten Ausführungsbeispiels eines Gassackes 1 dargestellt, bei dem die beiden seitlichen Gassackabschnitte 11a, 11b einerseits und 12a, 12b andererseits jeweils in zwei Teilabschnitte 11a und 11b bzw. 12a und 12b unterteilt sind, so dass der Gassack in einer Vorderansicht gemäß Figur 5b eine im Wesentlichen sternförmige Kontur aufweist, und bei dem neben dem Schlitz 15, der die beiden Gassackabschnitte 11a, 11b einerseits und 12a, 12b andererseits voneinander trennt, noch zwei zusätzliche Spalte 16a, 16b gebildet sind, die jeweils die Teilabschnitte 11a, 11 bzw. 12a , 12b voneinander trennen.

Ferner ist bei dem in den Figuren 5a und 5b dargestellten Ausführungsbeispiel das flächige Element 2 als Netz ausgebildet. Im Übrigen stimmt dieses Ausführungsbeispiel in seiner Funktion mit dem anhand der Figuren 1a bis 4c erläuterten überein.

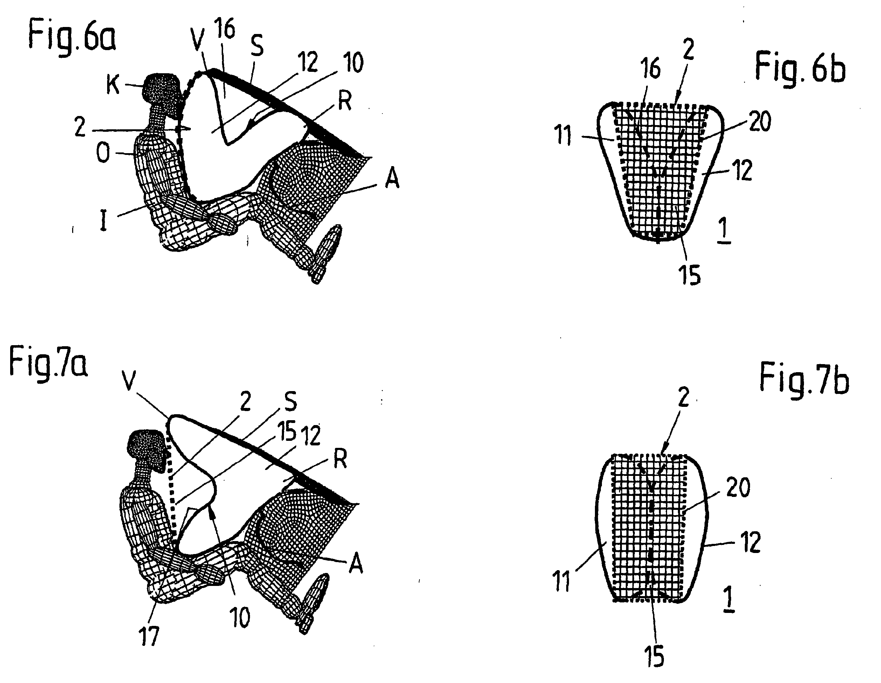

Figuren 6a und 6b zeigen ein Ausführungsbeispiel eines Gassackes 1, bei dem im Unterschied zu dem Ausführungsbeispiel gemäß den Figuren 1a bis 4c die beiden Gassackabschnitte 11, 12 nicht nur durch einen von dem flächigen Element 2 überdeckten Spalt 15 voneinander getrennt sind, sondern darüber hinaus auch auf ihrer Oberseite eine Ausbuchtung 16 unterhalb der Frontscheibe S eines Kraftfahrzeugs aufweisen.

Bei dem Ausführungsbeispiel gemäß den Figuren 7a und 7b weisen die beiden Gassackabschnitte 11, 12 zusätzlich auf ihrer Vorderseite eine Ausbuchtung 17 auf, d.h. eine Vertiefung, die sich in Richtung auf die Rückseite R des Gassackes 1 erstreckt.

Bei den Ausführungsbeispielen gemäß den Figuren 5a und 5b, 6a und 6b sowie 7a und 7b wird durch die zusätzlichen, durch den Zuschnitt des jeweiligen Gassackes 1 gebildeten Hohlräume 16a, 16b; 16 sowie 17 jeweils eine Verringerung des Arbeitsvolumens des Gassackes 1 erreicht, so dass entsprechend weniger Gas zum Aufblasen des Gassackes benötigt wird und hierzu ein kleinerer, leichterer Gasgenerator verwendet werden kann.

Im Ergebnis wird somit bei den Ausführungsbeispielen gemäß den Figuren 5a und 5b, 6a und 6b sowie 7a und 7b durch eine gezielte Anpassung des Zuschnittes der Gassackhülle an den innerhalb des Fahrzeugs, insbesondere zwischen Armaturentafel, Fensterscheibe und Insassen, zur Verfügung stehenden Raum ein optimaler Insassenschutz bei möglichst geringer erforderlicher Gasmenge erreicht.

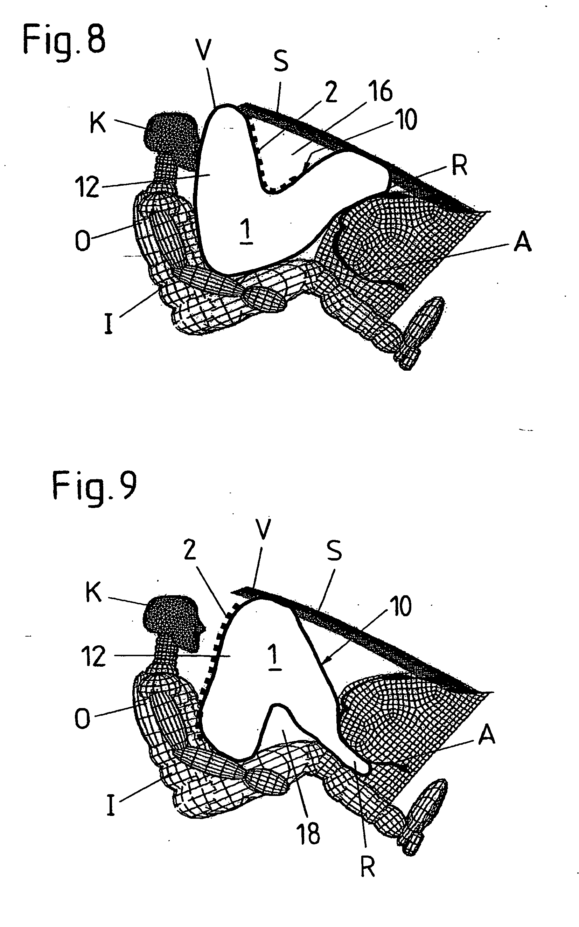

Figur 8 zeigt eine Abwandlung des Ausführungsbeispiels aus den Figuren 6a und 6b, bei der das flächige Element 2 sich nicht unmittelbar auf der Vorderseite V des Gassackes 1 erstreckt und somit den zwischen den beiden Gassackabschnitten 11, 12 gebildeten Spalt (15) vom Kopf K des Fahrzeuginsassen l her gesehen nicht vollständig überdeckt. Vielmehr erstreckt sich das flächige Element 2 von der Vorderseite V des Gassackes 1 her in einen Übergangsbereich zwischen der Vorderseite V und der Rückseite R des Gassackes 1, so dass ein dem Kopf K und Oberkörper O zugewandter Bereich des zwischen den Gassackabschnitten 11, 12 gebildeten Spaltes (15) nicht durch das flächige Element 2 überdeckt ist. Dementsprechend taucht der Fahrzeuginsasse l in einem Crash-Fall auf der Vordersite V der Gassackanordnung mit seinem Kopf K und seinem Oberkörper O zunächst ein Stück weit in den Bereich zwischen den beiden Gassackabschnitten 11, 12 (vergleiche Figur 6b) ein, bevor er durch das den Spalt zwischen diesen beiden Gassackabschnitten überbrückende flächige Element 2 aufgefangen wird. Die beschriebene Anordnung des flächigen Elementes 2 wird insbesondere durch die zusätzliche Ausbuchtung 16 des Gassackes 1 ermöglicht, die durch das flächige Element 2 teilweise begrenzt wird.

Im Ergebnis zeichnet sich also die in Figur 8 dargestellte Gassackanordnung dadurch aus, dass das flächige Element 2 auf der Vorderseite V des Gassackes 1 nicht unmittelbar an deren dem Kopf K und Oberkörper O des Fahrzeuginsassen I zugewandten vorderen Ende verläuft, sondern gegenüber diesem vorderen Ende ein Stück weit zu der Rückseite R des Gassackes 1 versetzt ist. Das flächige Element 2 überbrückt dadurch nur diejenigen Bereiche des zwischen den Gassackabschnitten gebildeten Spaltes, die - vom Kopf K und Oberkörper O des Fahrzeuginsassen l her gesehen - hinter dem flächigen Element 2 liegen. Dementsprechend taucht der Fahrzeuginsasse l bei einer Crash-bedingten Bewegung in Richtung auf die Vorderseite V des Gassackes 1 mit seinem Kopf K bzw. Oberkörper O zunächst in die vor dem flächigen Element 2 liegenden Bereiche des besagten Spaltes ein, bevor er durch das flächige Element 2 aufgefangen wird.

Figur 9 zeigt eine weitere Abwandlung der Gassackanordnung aus den Figuren 6a und 6b, wobei ein Unterschied darin besteht, dass die zusätzliche Ausbuchtung 18 des Gassackes 1 dem Knie- und Oberschenkelbereich des zu schützenden Insassen I (und nicht wie bei Figur 6a der Frontscheibe S des Fahrzeugs) zugewandt ist. Ein weiterer Unterschied besteht darin, dass der in Figur 9 gezeigte Gassack 1 ausgebildet und eingerichtet ist zur Befestigung seines rückseitigen Endes im unteren Bereich der Armaturentafel A eines Kraftfahrzeugs, so dass der Gassack 1 im Bereich seines rückseitigen Endes einen Knieschutz für den Fahrzeuginsassen l bildet, also einen Gassackabschnitt aufweist, der in einem Crash-Fall als Rückhalteelement für die Knie des Fahrzeuginsassen dient.

## Patentansprüche

1. Fahrer- oder Beifahrerairbag mit einem Gassack (1), der bei einem Frontalaufprall zum Schutz eines Kraftfahrzeuginsassen aufblasbar ist, und der mindestens zwei derart voneinander getrennte Gassackabschnitte (11, 12) aufweist, dass der aufgeblasene Gassack (1) auf seiner dem zu schützenden Insassen (I) zugewandten Vorderseite (V) einen zwischen den Gassackabschnitten (11, 12) verlaufenden Spalt (15) aufweist, durch den die beiden Gassackabschnitte (11, 12) auf der Vorderseite (V) des Gassackes (1) vollständig voneinander getrennt sind, wobei der Spalt (15) derart von einem flächigen Element (2) überbrückt ist, dass der zu schützende Insasse (I) bei einem Aufprall in Richtung auf die Vorderseite (V) des Gassackes (1) durch das flächige Element (2) aufgefangen wird,
**dadurch gekennzeichnet,**
**dass** sich das flächige Element (2) in einem Übergangsbereich zwischen der Vorderseite (V) des Gassackes (1) und der dem zu schützenden Insassen (I) abgewandten Rückseite (R) des Gassackes (1) erstreckt, indem das flächige Element (2) gegenüber der Vorderseite (V) des Gassackes (1) in Richtung auf dessen Rückseite (R) versetzt ist, so dass ein Teil des zwischen den Gassackabschnitten (11, 12) gebildeten Spaltes (15) - vom Kopf und Oberkörper des Fahrzeuginsassen (I) her gesehen - vor dem flächigen Element (2) verläuft.

2. Airbag nach Anspruch 1, **dadurch gekennzeichnet, dass** das flächige Element (2) von der dem zu schützenden Insassen (I) abgewandten Rückseite (R) des Gassackes (1) beabstandet angeordnet ist.

3. Airbag nach- Anspruch 1 oder 2, **dadurch gekennzeichnet, dass** das flächige Element (2) an jedem der Gassackabschnitte (11, 12) befestigt ist.

4. Airbag nach Anspruch 3, **dadurch gekennzeichnet, dass** das flächige Element (2) an jedem der Gassackabschnitte (11, 12) an mindestens einer Stelle ortsfest fixiert ist.

5. Airbag nach Anspruch 4, **dadurch gekennzeichnet, dass das** flächige Element (2) unverschiebbar an dem Gassack (1) festgelegt ist.

6. Airbag nach einem der vorhergehenden Ansprüche, **dadurch gekennzeichnet, dass** das flächige Element (2) beim Aufblasen des Gassackes (1) gestrafft wird.

7. Airbag nach einem der vorhergehenden Ansprüche, **dadurch gekennzeichnet, dass** das flächige Element (2) die Gassackabschnitte (11, 12) gegeneinander verspannt.

8. Airbag nach einem der vorhergehenden Ansprüche, **dadurch gekennzeichnet, dass** sich die Gassackabschnitte (11, 12) im Bereich des Spaltes (15) an mindestens einer Kontaktfläche berühren und an der Kontaktfläche Kontaktkräfte (F) auftreten, die die Tendenz haben, die beiden Gassackabschnitte (11, 12) auseinander zu drücken.

9. Airbag nach einem der vorhergehenden Ansprüche, **dadurch gekennzeichnet, dass** das flächige Element (2) den Spalt (15) derart überbrückt, dass der Insasse (I) bei einem Aufprall in Richtung auf die Vorderseite (V) des Gassackes (1) durch das flächige Element (2) aufgefangen wird.

10. Airbag nach Anspruch 9, **dadurch gekennzeichnet, dass** der Insasse (I) durch einen Bereich des flächigen Elementes (2) aufgefangen wird, hinter dem der Spalt (15) oder ein Teil des Spaltes (15) verläuft.

11. Airbag nach Anspruch 10, **dadurch gekennzeichnet, dass** der Bereich des flächigen Elementes (2) keinen unmittelbaren Kontakt mit dem Gassack (1) hat.

12. Airbag nach einem der vorhergehenden Ansprüche, **dadurch gekennzeichnet, dass** sich die Gassackabschnitte (11, 12) beim Aufblasen des Gassackes (1) von dem zu schützenden Insassen (I) her gesehen jeweils in einer Richtung (a) neben den Oberkörper (O) des zu schützenden Insassen (I) entfalten.

13. Airbag nach einem der vorhergehenden Ansprüche, **dadurch gekennzeichnet, dass** der Spalt (15) sich im Wesentlichen entlang der Längsrichtung des Oberkörpers (O) des Insassen (I) erstreckt.

14. Airbag nach einem der vorhergehenden Ansprüche, **dadurch gekennzeichnet, dass** das flächige Element (2) durch eine Membran gebildet wird.

15. Airbag nach einem der Ansprüche 1 bis 15, **dadurch gekennzeichnet, dass** das flächige Element (2) durch ein Netz gebildet wird.

16. Airbag nach einem der vorhergehenden Ansprüche, **dadurch gekennzeichnet, dass** das flächige Element (2) mittels mindestens einer Naht (N) an dem Gassack (1) befestigt ist, die zur Verbindung unterschiedlicher Teile der Gassackhülle (10) dient.

17. Airbag nach einem der vorhergehenden Ansprüche, **dadurch gekennzeichnet, dass** der Gassack (1) genau zwei durch einen Spalt (15) voneinander getrennte Gassackabschnitte (11, 12) aufweist.

18. Airbag nach einem der vorhergehenden Ansprüche, **dadurch gekennzeichnet, dass** der Gassack (1) im aufgeblasenen Zustand im Querschnitt im Wesentlichen V-förmig ausgebildet ist.

19. Airbag nach einem der Ansprüche 1 bis 16, **dadurch gekennzeichnet, dass** der Gassack (1) mehr als zwei Gassackabschnitte (11 a, 11 b, 12a, 12b) aufweist.

20. Airbag nach Anspruch 19, **dadurch gekennzeichnet, dass** die Gassackabschnitte (11a, 11b, 12a, 12b) sternförmig angeordnet sind.

21. Airbag nach einem der vorhergehenden Ansprüche, **dadurch gekennzeichnet, dass** der Gassack (1) zusätzlich zu dem Spalt (15) mindestens eine weitere Ausbuchtung (16, 16a, 16b, 17, 18) zwischen Gassackabschnitten aufweist.

22. Airbag nach einem der vorhergehenden Ansprüche, **dadurch gekennzeichnet, dass** der Gassack (1) derart eingerichtet und für eine derartige Befestigung an einem Kraftfahrzeug vorgesehen ist, dass der Gassack (1) zusätzlich einen Knieschutz ausbildet.

## Claims

1. Driver's or front passenger's airbag having a gas bag (1) which can be inflated in a head-on collision to protect a motor vehicle occupant, and which has at least two gas bag sections (11, 12) which are separated from one another in such a manner that the inflated gas bag (1) has, on its front side (V) facing the occupant (I) to be protected, a gap (15) which runs between the gas bag sections (11, 12) and by means of which the two gas bag sections (11, 12) are completely separated from each other on the front side (V) of the gas bag (1), the gap (15) being spanned by a sheet-like element (2) in such a manner that, in the case of an impact directed toward the front side (V) of the gas bag (1), the occupant (I) to be protected is intercepted by the sheet-like element (2), **characterized in that** the sheet-like element (2) extends in a transition region between the front side (V) of the gas bag (1) and the rear side (R) of the gas bag (1) which faces away from the occupant (I) to be protected, by the sheet-like element (2) being offset with respect to the front side (V) of the gas bag (1) in the direction of its rear side (R), with the result that a part of the gap (15) which is formed between the gas bag sections (11, 12) extends in front of the sheet-like element (2), as viewed from the head and upper body of the vehicle occupant (I).

2. Airbag according to Claim 1, **characterized in that** the sheet-like element (2) is arranged at a distance from the rear side (R) of the gas bag (1) which faces away from the occupant (I) to be protected.

3. Airbag according to Claim 1 or 2, **characterized in that** the sheet-like element (2) is fastened to each of the gas bag sections (11, 12).

4. Airbag according to Claim 3, **characterized in that** the sheet-like element (2) is positionally fixed at at least one point on each of the gas bag sections (11, 12).

5. Airbag according to Claim 4, **characterized in that** the sheet-like element (2) is fastened nondisplaceably to the gas bag (1).

6. Airbag according to one of the preceding claims, **characterized in that** the sheet-like element (2) is tightened during inflation of the gas bag (1).

7. Airbag according to one of the preceding claims, **characterized in that** the sheet-like element (2) braces the gas bag sections (11, 12) relative to each other.

8. Airbag according to one of the preceding claims, **characterized in that** the gas bag sections (11, 12) are in contact with each other in the gap (15) region on at least one contact surface and contact forces (F) appear on the contact surface, which have the tendency to push both gas bag sections (11, 12) apart.

9. Airbag according to one of the preceding claims, **characterized in that** the sheet-like element (2) spans the gap (15) in such a manner that, in the case of an impact directed toward the front side (V) of the gas bag (1), the occupant (I) is intercepted by the sheet-like element (2).

10. Airbag according to Claim 9, **characterized in that** the occupant (I) is intercepted by a region of the sheet-like element (2) behind which the gap (15) or a part of the gap (15) runs.

11. Airbag according to Claim 10, **characterized in that** the region of the sheet-like element (2) has no direct contact with the gas bag (1).

12. Airbag according to one of the preceding claims, **characterized in that** during inflation of the gas bag (1) the gas bag sections (11, 12) are in each case unfolded, as seen by the occupant (I) to be protected, in a direction (a) next to the upper body (O) of the occupant (I) to be protected.

13. Airbag according to one of the preceding claims, **characterized in that** the gap (15) extends essentially along the longitudinal direction of the upper body (O) of the occupant (I).

14. Airbag according to one of the preceding claims, **characterized in that** the sheet-like element (2) is formed by a membrane.

15. Airbag according to one of Claims 1 to 15, **characterized in that** the sheet-like element (2) is formed by a net.

16. Airbag according to one of the preceding claims, **characterized in that** the sheet-like element (2) is fastened to the gas bag (1) by means of at least one seam (N) which is used for connecting different parts of the gas bag covering (10).

17. Airbag according to one of the preceding claims, **characterized in that** the gas bag (1) has precisely two gas bag sections (11, 12) separated from each other by means of a gap (15).

18. Airbag according to one of the preceding claims, **characterized in that** the gas bag (1) when inflated is of essentially V-shaped design in cross section.

19. Airbag according to one of Claims 1 to 16, **characterized in that** the gas bag (1) has more than two gas bag sections (11a, 11b, 12a, 12b).

20. Airbag according to Claim 19, **characterized in that** the gas bag sections (11a, 11b, 12a, 12b) are arranged in a star-shaped manner.

21. Airbag according to one of the preceding claims, **characterized in that** the gas bag (1) has, in addition to the gap (15), at least one further indentation (16, 16a, 16b, 17) between gas bag sections.

22. Airbag according to one of the preceding claims, **characterized in that** the gas bag (1) is arranged in such a manner and designed for such fastening on a motor vehicle that the gas bag (1) additionally forms a knee protector.

## Revendications

1. Coussin gonflable pour conducteur ou passager avec un sac à gaz (1), qui peut être gonflé pour protéger un occupant d'un véhicule automobile lors d'un choc frontal et qui présente au moins deux sections de sac à gaz (11, 12) séparées l'une de l'autre de telle sorte que le sac à gaz (1) gonflé présente, sur son côté avant (V) tourné vers l'occupant (I) à protéger, une fente (15) s'étendant entre les sections de sac à gaz (11, 12), par laquelle les deux sections de sac à gaz (11, 12) sont totalement séparées l'une de l'autre sur le côté avant (V) du sac à gaz (1), la fente (15) étant compensée par un élément plat (2) de sorte que, lors d'un choc dans la direction du côté avant (V) du sac à gaz (1), l'occupant (I) à protéger soit amorti par l'élément plat (2),
**caractérisé en ce que**
l'élément plat (2) s'étend dans une zone de passage entre le côté avant (V) du sac à gaz (1) et le côté arrière (R) du sac à gaz (1) opposé à l'occupant (I) à protéger, l'élément plat (2) étant déplacé par rapport au côté avant (V) du sac à gaz (1) dans la direction de son côté arrière (R), de sorte qu'une partie de la fente (15) formée entre les sections de sac à gaz (11, 12) s'étende devant l'élément plat (2), en regardant depuis la tête et le haut du corps de l'occupant du véhicule (I).

2. Coussin gonflable selon la revendication 1, **caractérisé en ce que** l'élément plat (2) est disposé à distance du côté arrière (R) du sac à gaz (1) opposé à l'occupant (I) à protéger.

3. Coussin gonflable selon la revendication 1 ou 2, **caractérisé en ce que** l'élément plat (2) est fixé à chacune des sections de sac à gaz (11, 12).

4. Coussin gonflable selon la revendication 3, **caractérisé en ce que** l'élément plat (2) est fixé de manière stationnaire à au moins un emplacement sur chacune des sections de sac à gaz (11, 12).

5. Coussin gonflable selon la revendication 4, **caractérisé en ce que** l'élément plat (2) est fixé de manière non déplaçable sur le sac à gaz (1).

6. Coussin gonflable selon l'une quelconque des revendications précédentes, **caractérisé en ce que** l'élément plat (2) est comprimé lorsque le sac à gaz (1) est gonflé.

7. Coussin gonflable selon l'une quelconque des revendications précédentes, **caractérisé en ce que** l'élément plat (2) serre les sections de sac à gaz (11, 12) l'une contre l'autre.

8. Coussin gonflable selon l'une quelconque des revendications précédentes, **caractérisé en ce que** les sections de sac à gaz (11, 12) se touchent dans la zone de la fente (15) au niveau d'au moins une surface de contact et des forces de contact (F) se produisent sur la surface de contact, lesquelles ont tendance à pousser les deux sections de sac à gaz (11, 12) l'une hors de l'autre.

9. Coussin gonflable selon l'une quelconque des revendications précédentes, **caractérisé en ce que** l'élément plat (2) compense la fente (15) de telle sorte que, lors d'un choc, l'occupant (I) soit amorti dans la direction du côté avant (V) du sac à gaz (1) par l'élément plat (2).

10. Coussin gonflable selon la revendication 9, **caractérisé en ce que** l'occupant (I) est amorti par une zone de l'élément plat (2), derrière laquelle s'étend la fente (15) ou une partie de la fente (15).

11. Coussin gonflable selon la revendication 10, **caractérisé en ce que** la zone de l'élément plat (2) n'a aucun contact direct avec le sac à gaz (1).

12. Coussin gonflable selon l'une quelconque des revendications précédentes, **caractérisé en ce que,** lorsque le sac à gaz (1) est gonflé, les sections de sac à gaz (11, 12) se déploient respectivement dans une direction (a) près du haut du corps (O) de l'occupant (I) à protéger, en regardant depuis l'occupant (I) à protéger.

13. Coussin gonflable selon l'une quelconque des revendications précédentes, **caractérisé en ce que** la fente (15) s'étend essentiellement le long de la direction longitudinale du haut du corps (O) de l'occupant (I).

14. Coussin gonflable selon l'une quelconque des revendications précédentes, **caractérisé en ce que** l'élément plat (2) est formé par une membrane.

15. Coussin gonflable selon l'une quelconque des revendications 1 à 15, **caractérisé en ce que** l'élément plat (2) est formé par un filet.

16. Coussin gonflable selon l'une quelconque des revendications précédentes, **caractérisé en ce que** l'élément plat (2) est fixé au sac à gaz (1) au moyen d'au moins une couture (N), qui sert à assembler différentes parties de l'enveloppe de sac à gaz (10).

17. Coussin gonflable selon l'une quelconque des revendications précédentes, **caractérisé en ce que** le sac à gaz (1) présente exactement deux sections de sac à gaz (11, 12) séparées l'une de l'autre par une fente (15).

18. Coussin gonflable selon l'une quelconque des revendications précédentes, **caractérisé en ce que** le sac à gaz (1) à l'état gonflé est réalisé essentiellement en forme de V dans la section transversale.

19. Coussin gonflable selon l'une quelconque des revendications 1 à 16, **caractérisé en ce que** le sac à gaz (1) présente plus de deux sections de sac à gaz (11a, 11b, 12a, 12b).

20. Coussin gonflable selon la revendication 19, **caractérisé en ce que** les sections de sac à gaz (11a, 11b, 12a, 12b) sont disposées en forme d'étoile.

21. Coussin gonflable selon l'une quelconque des revendications précédentes, **caractérisé en ce que** le sac à gaz (1) présente en plus de la fente (15) au moins une courbure supplémentaire (16, 16a, 16b, 17, 18) entre les sections de sac à gaz.

22. Coussin gonflable selon l'une quelconque des revendications précédentes, **caractérisé en ce que** le sac à gaz (1) est agencé et prévu pour une fixation de ce type sur un véhicule automobile, de telle sorte que le sac à gaz (1) constitue en outre une protection pour les genoux.
